# EUROPÄISCHE PATENTANMELDUNG

(11) **EP 4 607 749 A1**
(43) Veröffentlichungstag der Anmeldung: **27.08.2025**
(21) Anmeldenummer: 25155725.2
(22) Anmeldetag: 04.02.2025
(51) Int. Cl.: H02J 7/00

(54) **MOBILE ENERGIEVERSORGUNGSEINHEIT FÜR EINE MOBILE ARBEITSMASCHINE**

(30) Priorität: 23.02.2024 DE 102024105117
(71) Anmelder: Liebherr-Hydraulikbagger GmbH, 88457 Kirchdorf/Iller (DE)
(72) Erfinder: HESS, Christoph, 88138 Hergensweiler (DE)
(74) Vertreter: Laufhütte, Dieter

(57) **Zusammenfassung**

Die Erfindung betrifft eine mobile Energieversorgungseinheit für eine elektrisch betreibbare, mobile Arbeitsmaschine umfassend eine von einem Gehäuse umgebene Energiequelle und einen ersten elektrischen Anschluss, über welchen die Arbeitsmaschine mit der Energiequelle elektrisch verbindbar und von dieser mit elektrischer Energie versorgbar ist. Erfindungsgemäß weist das Gehäuse ein Aufnahmeelement auf, welches so ausgebildet und angeordnet ist, dass die Energieversorgungseinheit mittels eines Greifwerkzeugs und/oder einer Schnellkupplungseinrichtung der Arbeitsmaschine greifbar und bewegbar ist. Die Erfindung betrifft ferner ein Set mit einer erfindungsgemäßen Energieversorgungseinheit, eine Arbeitsmaschine mit einer erfindungsgemäßen Energieversorgungseinheit und ein Verfahren zum Bewegen einer solchen.

## Beschreibung

Die vorliegende Erfindung betrifft eine mobile Energieversorgungseinheit gemäß dem Oberbegriff des Anspruchs 1, ein Set und eine mobile Arbeitsmaschine mit einer solchen sowie ein Verfahren zum Bewegen der Energieversorgungseinheit.

In den letzten Jahren ging der Trend verstärkt zur Elektrifizierung von Arbeitsmaschinen, um den CO₂-Ausstoß zu senken und die Energiesicherheit zu erhöhen. Mobile Arbeitsmaschinen können dabei die Energiequelle (z.B. eine Batterie bzw. ein Akku-Pack, eine Verbrennungsmotor-Generator-Kombination oder eine Brennstoffzelle) selbst mitführen, um die elektrischen Antriebe mit Energie zu versorgen. Hierfür ist jedoch in der Arbeitsmaschine der benötigte Bauraum zur Verfügung zu stellen, was die Abmessungen der Arbeitsmaschine sowie das Gewicht vergrößert.

Alternativ können mobile Arbeitsmaschinen über eine stationäre, externe Energiequelle versorgt werden, wobei entsprechend lange und flexible Energieversorgungsleitungen bereitzustellen sind. Allerdings kann eine solche Lösung die Bewegungsfreiheit der Arbeitsmaschine im Arbeitsbetrieb beschränken. Zudem besitzen stationäre Energieversorgungssysteme eine begrenzte Reichweite, sodass die Arbeitsmaschine bei einem Wechsel des Einsatzorts (z.B. in ein Nachtlager oder in eine Werkstatt) hierfür temporär über eine andere Energiequelle, z. B. einen verbauten Verbrennungsmotor oder eine zeitweise an die Arbeitsmaschine angebaute Energieversorgungseinrichtung, versorgt werden muss. Zudem ist es bei einer stationären Energieversorgung oftmals nicht ohne Weiteres möglich, einen schnellen Standortwechsel, z.B. zum Verlassen eines Gefahrenbereichs in einem Notfall, durchzuführen.

Der vorliegenden Erfindung liegt daher die Aufgabe zugrunde, diese Nachteile zu vermeiden und die Einsatzreichweite und Flexibilität einer über eine stationäre Energieversorgung elektrisch betreibbaren, mobilen Arbeitsmaschine zu erhöhen.

Erfindungsgemäß wird diese Aufgabe durch eine Vorrichtung mit den Merkmalen des Anspruchs 1, ein Set mit den Merkmalen des Anspruchs 11, eine Arbeitsmaschine mit den Merkmalen des Anspruchs 12 und ein Verfahren mit den Merkmalen des Anspruchs 14 gelöst. Vorteilhafte Ausführungsformen der Erfindung ergeben sich aus den Unteransprüchen und der nachfolgenden Beschreibung.

Demnach wird eine mobile Energieversorgungseinheit für eine elektrisch betreibbare, mobile Arbeitsmaschine vorgeschlagen, welche ein Gehäuse, eine vom Gehäuse umgebene Energiequelle und einen ersten elektrischen Anschluss umfasst. Über den ersten elektrischen Anschluss ist die Arbeitsmaschine elektrisch mit der Energiequelle der mobilen Energieversorgungseinheit verbindbar und von dieser mit elektrischer Energie versorgbar. Die Energiequelle kann vollständig oder teilweise von dem Gehäuse umgeben sein. Das Gehäuse kann ein Metallgehäuse sein.

Erfindungsgemäß besitzt das Gehäuse ein Aufnahmeelement, welches so ausgebildet und so am Gehäuse angeordnet ist, dass die Energieversorgungseinheit mittels eines Greifwerkzeugs der Arbeitsmaschine greifbar und bewegbar ist. Das Aufnahmeelement ist in diesem Fall speziell dafür ausgelegt und ausgebildet, über ein Greifwerkzeug gegriffen und sicher gehalten zu werden, sodass die Energieversorgungseinheit über die Arbeitsmaschine gehoben, bewegt und mitgeführt werden kann.

Alternativ kann das Aufnahmeelement erfindungsgemäß so ausgebildet und so am Gehäuse angeordnet sein, dass die Energieversorgungseinheit mittels einer Schnellkupplungseinrichtung der Arbeitsmaschine greifbar und bewegbar ist. Bei der Schnellkupplungseinrichtung kann es sich um einen bekannten mechanischen Schnellwechsler handeln, über welchen die Arbeitsmaschine schnell und einfach ein Anbauwerkzeug aufnehmen kann (z.B. bei einem Hydraulikbagger wahlweise einen Baggerlöffel oder einen Greifer). Das Aufnahmeelement weist in diesem Fall entsprechende Aufnahmeelemente auf, die über den Schnellwechsler der Arbeitsmaschine wie bei einem Anbauwerkzeug aufgenommen werden können.

Das Aufnahmeelement kann einstückig am Gehäuse ausgebildet oder über Verbindungsmittel (z.B. Schrauben) mit dem Gehäuse verbunden sein. Das Gehäuse kann eine Bodenplatte und/oder Standfüße zum Abstellen auf dem Boden umfassen.

Die erfindungsgemäße mobile Energieversorgungseinheit kann von der Arbeitsmaschine mitgeführt werden und dadurch auch während einer Standortverlagerung die Arbeitsmaschine mit elektrischer Energie versorgen. Durch das Gehäuse ist die Energiequelle vor äußeren Einflüssen geschützt, während die Energieversorgungseinheit während des Arbeitsbetriebs auf dem Boden abgestellt werden kann. Durch die einfache und über das Greifwerkzeug erfolgende Aufnahme der Energieversorgungseinheit am Aufnahmeelement muss die Energieversorgungseinheit beim Verfahren der Arbeitsmaschine nicht an dieser angebaut werden. Bei einer Aufnahme über eine Schnellkupplungseinrichtung kann die Aufnahme in üblicher Weise schnell und einfach erfolgen. Dadurch vergrößert sich der Operationsradius der Arbeitsmaschine, da diese auch ohne Verbindung zu einer stationären Energiequelle verfahren werden kann (z.B. zu einem anderen Einsatzort, in eine Werkstatt oder in ein "Nachtlager").

Die Arbeitsmaschine kann im Arbeitsbetrieb parallel zur mobilen Energieversorgungseinheit auch mit einer externen Energiequelle verbunden sein, wobei diese zum Verfahren abgekoppelt werden kann (die Versorgung erfolgt dann nur noch über die mobile Energieversorgungseinheit). Alternativ könnte eine externe Energiequelle auch über einen entsprechenden Anschluss an der mobilen Energieversorgungseinheit anschließbar und elektrisch mit der Arbeitsmaschine verbindbar sein.

Die erfindungsgemäße Energieversorgungseinheit ist vorzugsweise zu keinem Zeitpunkt fest mit der Arbeitsmaschine verbunden bzw. an dieser montiert. Vorzugsweise besitzt die Energieversorgungseinheit keine Verbindungselemente zum festen (wenn auch nur temporären) Montieren an einer Arbeitsmaschine. Stattdessen ist die Energieversorgungseinheit vorzugsweise in einem stationären Betrieb auf dem Boden (oder auf einer anderen Vorrichtung) abgestellt und hängt in einem mobilen Betrieb an einem Greifwerkzeug der Arbeitsmaschine.

In einer möglichen Ausführungsform ist vorgesehen, dass das Aufnahmeelement an einer Oberseite des Gehäuses angeordnet ist und vorzugsweise den höchsten Punkt der Energieversorgungseinheit bildet. Dadurch kann das Aufnahmeelement einfach und ohne Gefahr einer Beschädigung des restlichen Gehäuses von einem Greifwerkzeug oder einer Schnellkupplungseinrichtung aufgenommen werden.

In einer weiteren möglichen Ausführungsform ist vorgesehen, dass das Aufnahmeelement einen ersten Abschnitt und zweiten Abschnitt (Halteabschnitt) umfasst. Der erste Abschnitt kann zylinderförmig ausgestaltet sein, wobei auch andere Formen (z.B. rechteckiger Querschnitt) denkbar sind. Der zweite Abschnitt befindet sich an einem dem Gehäuse abgewandten Ende des Aufnahmeelements und ist gegenüber dem ersten Abschnitt verbreitert. Dadurch kann ein Greifer das Aufnahmeelement unterhalb des Halteabschnitts im Bereich des ersten Abschnitts greifen, wobei der breitere Halteabschnitt ein Herausrutschen des Aufnahmeelements aus dem Griff des Greifwerkzeugs verhindert. Der erste Abschnitt kann direkt an das Gehäuse grenzen und ggf. einstückig mit diesem ausgebildet sein. Die ersten und zweiten Abschnitte können einstückig ineinander übergehen oder über Verbindungsmittel miteinander verbunden sein. Das Aufnahmeelement kann insgesamt eine pilzförmige Gestalt aufweisen.

In einer weiteren möglichen Ausführungsform ist vorgesehen, dass die Energieversorgungseinheit einen zweiten elektrischen Anschluss umfasst, welcher mit einer externen Energiequelle elektrisch verbindbar ist. Die Energieversorgung der Arbeitsmaschine aus der externen Energiequelle (z.B. einem Baustellennetz) in einem stationären Betrieb erfolgt also über die mobile Energieversorgungseinheit. Letztere umfasst ferner eine Umschaltvorrichtung, welche mit den ersten und zweiten elektrischen Anschlüssen und mit der Energiequelle der Energieversorgungseinheit elektrisch verbunden und dazu ausgebildet ist, in einem stationären Betrieb die ersten und zweiten elektrischen Anschlüsse elektrisch miteinander zu verbinden, sodass die Arbeitsmaschine über die externe Energiequelle versorgbar ist. In einem mobilen Betrieb ist die Energiequelle der Energieversorgungseinheit mit dem ersten elektrischen Anschluss elektrisch verbunden, sodass die Arbeitsmaschine über die Energiequelle der Energieversorgungseinheit mit Energie versorgt wird. Die Umschaltvorrichtung stellt somit eine Art Weiche dar, um zwischen einer Energieversorgung über eine externe Energiequelle oder über die interne Energiequelle der Energieversorgungseinheit umzuschalten.

Die Umschaltvorrichtung kann in das Gehäuse integriert sein. Alternativ kann die Umschaltvorrichtung an einer Außenseite des Gehäuses angebracht sein. Der zweite elektrische Anschluss kann an der Umschaltvorrichtung oder an einer anderen Stelle der Energieversorgungseinheit angeordnet sein. Die ersten und zweiten Anschlüsse können beide an der Umschaltvorrichtung oder an unterschiedlichen Stellen am Gehäuse angeordnet sein.

Bei dem ersten und/oder dem zweiten Anschluss kann es sich um eine elektrischen Konnektor handeln. Neben einer Übertragung von elektrischer Energie kann der erste und/oder zweite Anschluss auch wenigstens eine Signalverbindung zur Übertragung elektrischer Signale (z.B. zum Schalten der Umschaltvorrichtung) umfassen.

In einer weiteren möglichen Ausführungsform ist vorgesehen, dass die Umschaltvorrichtung manuell schaltbar ist, beispielsweise über ein an einer Außenseite des Gehäuses angeordnetes Schaltelement. Alternativ oder zusätzlich kann die Umschaltvorrichtung drahtlos schaltbar sein, beispielsweise per Fernbedienung und/oder aus einer Fahrerkabine der Arbeitsmaschine heraus. Alternativ oder zusätzlich kann die Umschaltvorrichtung über eine Signalleitung schaltbar sein, beispielsweise durch Betätigung eines entsprechenden Schaltelements in einer Fahrerkabine der Arbeitsmaschine. Die wenigstens eine Signalleitung kann über den ersten elektrischen Anschluss mit einer Steuerung der Arbeitsmaschine verbindbar sein.

In einer weiteren möglichen Ausführungsform ist vorgesehen, dass die Energieversorgungseinheit eine Abspanneinrichtung umfasst, welche mit der Arbeitsmaschine mechanisch verbindbar ist, um eine Relativbewegung zwischen Energieversorgungseinheit und Arbeitsmaschine zu begrenzen und insbesondere die angehobene Energieversorgungseinheit bei einer Bewegung der Arbeitsmaschine sicher zu verspannen. Die Abspanneinrichtung kann mit einer Tragstruktur der Arbeitsmaschine, beispielsweise einem Unterwagen, einem Oberwagen oder einer Abstützvorrichtung, verbindbar sein. Die Arbeitsmaschine kann mehrere Anschlagpunkte für die Abspanneinrichtung an unterschiedlichen Stellen aufweisen, um beispielsweise eine mechanische Verbindung bei unterschiedlichen Oberwagendrehstellungen zu ermöglichen.

Die Abspanneinrichtung umfasst vorzugsweise ein mit dem Gehäuse der Energieversorgungseinheit verbundenes Abspannelement, welches beispielsweise eine Kette, ein Seil oder ein Band (oder eine Kombination hiervon) sein oder umfassen kann. Das Abspannelement weist vorzugsweise ein mechanisches Anschlusselement auf, um die Verbindung mit der Arbeitsmaschine herzustellen (beispielsweise einen Karabiner oder ein Bolzenelement).

Beim Anheben und Bewegen der Energieversorgungseinheit kann diese gegenüber der Arbeitsmaschine bzw. gegen die Tragstruktur der Arbeitsmaschine verspannt werden, indem die Energieversorgungseinheit von der Tragstruktur wegbewegt wird, sodass sich das Abspannelement spannt. Dadurch wird ein unkontrolliertes Schwanken der gehobenen Energieversorgungseinheit bei einer Bewegung der Arbeitsmaschine (z.B. beim Verfahren zu einem anderen Standort) verhindert.

In einer weiteren möglichen Ausführungsform ist vorgesehen, dass die Energieversorgungseinheit eine flexible Energieversorgungsleitung umfasst, welche elektrisch mit der Energiequelle verbunden ist und den ersten elektrischen Anschluss aufweist. Bei der flexiblen Energieversorgungsleitung kann es sich im einfachsten Fall um ein Kabel, aber beispielsweise auch um eine flexible, mehrere Kabel enthaltende Energieführungshülse oder-kette handeln. Die Energieversorgungseinheit kann eine vorzugsweise an einer Außenseite des Gehäuses angeordnete Wickelvorrichtung umfassen, auf der die Energieversorgungsleitung auf- und abwickelbar gelagert ist, um die Länge der freiliegenden Energieversorgungsleitung an den Abstand zwischen Energieversorgungseinheit und Arbeitsmaschine anzupassen. Die Wickelvorrichtung kann eine passiv oder aktiv drehbare Seiltrommel umfassen.

Die zuvor genannte Abspanneinrichtung und/oder Energieversorgungsleitung kann ständig, d.h. auch in einem stationären Arbeitsbetrieb mit der Arbeitsmaschine verbunden sein.

In einer weiteren möglichen Ausführungsform ist vorgesehen, dass die Energiequelle einen Verbrennungsmotor (z.B. einen Dieselmotor) mit nachgeschaltetem Generator umfasst. Ein Treibstofftank kann in die Energieversorgungseinheit integriert oder extern vorgehalten und mit dem Verbrennungsmotor verbunden sein. Alternativ oder zusätzlich kann die Energiequelle einen Energiespeicher, beispielsweise in Form einer Batterie oder eines Akkus (bzw. eines Batterie- oder Akku-Packs) umfassen. Der Energiespeicher kann vorzugsweise über eine externe Energiequelle aufgeladen werden (beispielsweise in einem stationären Betrieb, in welchem die externe Energiequelle die Arbeitsmaschine mit Strom versorgt). Alternativ oder zusätzlich kann die Energiequelle eine Brennstoffzelle (bzw. einen Stack) umfassen. Ein Drucktank (z.B. für Wasserstoff oder Methan) kann in die Energieversorgungseinheit integriert oder extern vorgehalten und mit der Brennstoffzelle verbunden sein.

In einer weiteren möglichen Ausführungsform ist vorgesehen, dass die Energieversorgungseinheit einen modularen Aufbau besitzt und die Energiequelle ein oder mehrere reversibel mit dem Gehäuse und/oder miteinander verbindbare Energieversorgungsmodule umfasst. Dadurch kann die Kapazität und/oder Auslegung der Energiequelle der Energieversorgungseinheit flexibel an die gewünschten Anforderungen bzw. an die zu versorgende Arbeitsmaschine angepasst werden, ohne mehrere separate Energieversorgungseinheiten vorhalten zu müssen. Stattdessen können mehrere Energieversorgungsmodule vorgehalten und je nach Bedarf zu einer gewünschten Energiequelle zusammengesetzt werden. Beispielsweise könnten mehrere Energiespeichermodule zu einem Speicher mit einer gewünschten Gesamtkapazität zusammengesetzt werden. Ebenfalls kann mindestens ein Antriebsmodul mit einem Verbrennungsmotor, mindestens ein Brennstoffzellenmodul, mindestens ein Tankmodul, mindestens ein Steuerungsmodul usw. vorhanden sein. Um die Energieversorgungsmodule aufnehmen zu können, kann das Gehäuse Aufnahmen mit mechanischen Verbindungselementen (z.B. Schienen) aufweisen. In diese können die Energieversorgungsmodule eingesetzt und befestigt werden.

In einer weiteren möglichen Ausführungsform ist vorgesehen, dass das Aufnahmeelement lösbar mit dem Gehäuse verbunden ist. Dadurch können unterschiedlich geformte Aufnahmeelemente je nach Form des Greifwerkzeugs oder der Schnellkupplungseinrichtung der zu versorgenden Arbeitsmaschine angebaut werden, ohne für unterschiedliche Werkzeugtypen separate Energieversorgungseinheiten vorhalten zu müssen. Alternativ kann das Aufnahmeelement aus mehreren miteinander lösbar verbindbaren Teilen aufgebaut sein, wobei beispielsweise ein den zuvor genannten zweiten Abschnitt umfassendes Halteteil abbaubar und gegen ein unterschiedlich geformtes Halteteil austauschbar ist.

Die Erfindung betrifft ferner ein Set, welches die erfindungsgemäße Energieversorgungseinheit umfasst. Die Energieversorgungseinheit kann eine modulare Energiequelle aufweisen, wobei das Set mehrere Energieversorgungsmodule wie zuvor beschrieben umfasst. Alternativ oder zusätzlich kann die Energieversorgungseinheit ein austauschbares und/oder mehrteiliges Aufnahmeelement aufweisen, wobei das Set mehrere Aufnahmeelemente und/oder mehrere Halteteile der Aufnahmeelemente wie zuvor beschrieben umfasst.

Die Erfindung betrifft ferner eine mobile Arbeitsmaschine mit einer erfindungsgemä-βen mobilen Energieversorgungseinheit. Bei der Arbeitsmaschine kann es sich um eine beliebige mobile Arbeitsmaschine mit wenigstens einem elektrischen Antrieb und einem Greifwerkzeug und/oder einer Schnellkupplungseinrichtung handeln, beispielsweise um eine mobile Umschlagmaschine, einen Hydraulikbagger oder dergleichen. Vorzugsweise ist die mobile Arbeitsmaschine rein elektrisch betreibbar (d.h. sowohl der Fahrantrieb als auch der Antrieb der Arbeitsfunktionen erfolgt elektrisch). Dies schließt nicht aus, dass die Arbeitsmaschine hydraulische Aktuatoren umfasst (z.B. Hydraulikzylinder zum Bewegen eines Auslegers), die über elektrisch angetriebene Hydraulikpumpen gesteuert werden.

Die Arbeitsmaschine kann einen fahrbaren Unterwagen mit einem Rad-, Raupen- oder Schienenfahrwerk und einen drehbar auf dem Unterwagen gelagerten Oberwagen umfassen. Die Arbeitsmaschine kann einen bewegbaren Ausleger umfassen, der das Greifwerkzeug und/oder die Schnellkupplungseinrichtung trägt, z.B. einen mehrere gegeneinander bewegliche Teilsegmente umfassenden Ausleger. Die Arbeitsmaschine kann eine Abstützeinrichtung umfassen, welche beispielsweise an einem Unterwagen angeordnet sein kann.

In einer möglichen Ausführungsform ist vorgesehen, dass die mobile Arbeitsmaschine mindestens einen elektrischen Antrieb und einen dritten elektrischen Anschluss aufweist. Letzterer ist mit dem ersten elektrischen Anschluss der Energieversorgungseinheit verbindbar, um den elektrischen Antrieb mit Energie zu versorgen. Die ersten und dritten elektrischen Anschlüsse können eine einfach herzustellende und ggf. über eine Verriegelung zu sichernde Steckverbindung bilden.

Die Erfindung betrifft ferner ein Verfahren zum Bewegen der erfindungsgemäßen mobilen Energieversorgungseinheit mittels der erfindungsgemäßen mobilen Arbeitsmaschine. Dabei ergeben sich dieselben Vorteile, Eigenschaften und möglichen Ausführungsformen wie zuvor beschrieben, sodass auf eine wiederholende Beschreibung weitgehend verzichtet wird. Bei dem Verfahren wird die Energieversorgungseinheit am Aufnahmeelement über ein Greifwerkzeug oder eine Schnellkupplungseinrichtung der Arbeitsmaschine aufgegriffen und angehoben bzw. bewegt. Dabei versorgt die Energieversorgungseinheit (bzw. deren Energiequelle) während des Anhebens und Bewegens ständig die Arbeitsmaschine mit elektrischer Energie, sodass diese unabhängig von einer externen, stationären Energieversorgung verfahren werden kann.

Die Energieversorgungseinheit kann eine zuvor beschriebene Abspanneinrichtung aufweisen. Diese kann während des Anhebens und Bewegens der Energieversorgungseinheit mit der Arbeitsmaschine verbunden bleiben. Vorzugsweise wird dabei die Energieversorgungseinheit durch entsprechende Bewegung des Greifwerkzeugs oder der Schnellkupplungseinrichtung (z.B. über eine entsprechende Bewegung eines Auslegers) nach außen bewegt, sodass sich die Abspanneinrichtung spannt und die einerseits am Greifwerkzeug / an der Schnellkupplungseinrichtung hängende und andererseits über die Abspanneinrichtung mit der Arbeitsmaschine verbundene Energieversorgungseinheit verspannt wird. Dadurch werden ungewollte Bewegungen der Energieversorgungseinheit beim Verfahren der Arbeitsmaschine verhindert und die Energieversorgungseinheit ist in der Luft gesichert.

In einer möglichen Ausführungsform ist vorgesehen, dass die Energieversorgungseinheit eine zuvor beschriebene Umschaltvorrichtung aufweist. Vor dem Aufgreifen und Bewegen der Energieversorgungseinheit durch das Greifwerkzeug oder die Schnellkupplungseinrichtung wird die Arbeitsmaschine im stationären Betrieb über eine an die Energieversorgungseinheit angeschlossene externe Energiequelle (z.B. stationäres Stromnetz) versorgt.

Um die Energieversorgungseinheit bzw. die Arbeitsmaschine zu bewegen, wird die Umschaltvorrichtung vom stationären Betrieb in den mobilen Betrieb umgeschaltet, sodass die Arbeitsmaschine über die interne Energiequelle der Energieversorgungseinheit und nicht mehr über die externe Energiequelle mit Energie versorgt wird. Vor der Bewegung wird die externe Energiequelle vorzugsweise von dem zweiten elektrischen Anschluss der Energieversorgungseinheit getrennt.

Nach Beendigung der Bewegung (z.B. nachdem die Arbeitsmaschine mit aufgegriffener Energieversorgungseinheit von einem ersten Standort zu einem zweiten Standort verfahren wurde, wobei am zweiten Standort wieder dieselbe oder eine andere externe Energiequelle bereitsteht), wird die Umschaltvorrichtung vorzugsweise wieder in den stationären Betrieb umgeschaltet. Hierzu wird zuvor wieder eine Verbindung mit der externen Energiequelle am zweiten elektrischen Anschluss hergestellt. Nun kann die interne Energiequelle der Energieversorgungseinheit vorzugsweise über die stationäre Energiequelle aufgeladen werden.

Weitere Merkmale, Einzelheiten und Vorteile der Erfindung ergeben sich aus den nachfolgend anhand der Figuren erläuterten Ausführungsbeispielen. Es zeigen:
- Figur 1:: eine schematische Schnittansicht der mobilen Energieversorgungseinheit gemäß einem ersten Ausführungsbeispiel;
- Figur 2:: eine schematische Schnittansicht der mobilen Energieversorgungseinheit gemäß einem zweiten Ausführungsbeispiel;
- Figur 3:: ein Ausführungsbeispiel der erfindungsgemäßen Arbeitsmaschine in einer seitlichen Ansicht mit angehobener Energieversorgungseinheit; und
- Figur 4:: Die Arbeitsmaschine gemäß Fig. 3 im stationären Arbeitsbetrieb mit abgestellter Energieversorgungseinheit.

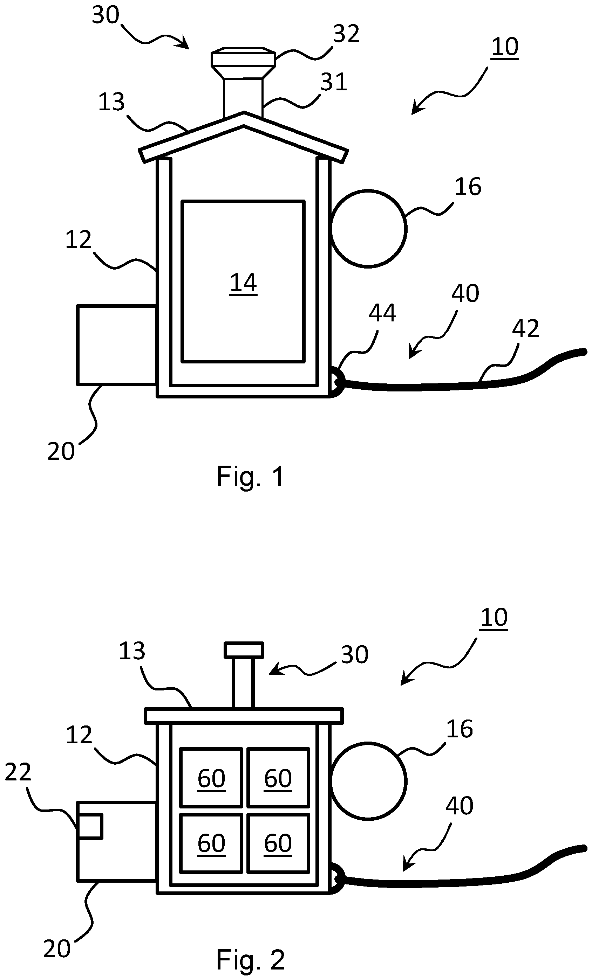

Die Figur 1 zeigt in schematischer Weise ein erstes Ausführungsbeispiel der erfindungsgemäßen mobilen Energieversorgungseinheit 10 in einer seitlichen Schnittansicht. Die Energieversorgungseinheit 10 umfasst ein Gehäuse 12 und eine innerhalb des Gehäuses 12 angeordnete Energiequelle 14 zum Erzeugen oder Bereitstellen von elektrischer Energie. Die lediglich schematisch als Kasten eingezeichnete Energiequelle 14 kann beispielsweise einen Verbrennungsmotor und einen Generator, einen elektrischen Energiespeicher und/oder eine Brennstoffzelle umfassen.

Bei dem Ausführungsbeispiel der Figur 1 umfasst das Gehäuse 12 ein Oberteil 13, auf dessen Oberseite sich ein Aufnahmeelement 30 befindet. Dieses ist so ausgebildet, dass es von einem Greifwerkzeug 8 einer Arbeitsmaschine 1 gegriffen und dadurch die gesamte Energieversorgungseinheit 10 angehoben und bewegt werden kann. Das Oberteil 13 und das restliche Gehäuse 12 können einstückig ausgebildet sein oder unterschiedliche und ggf. voneinander trennbare Teile darstellen.

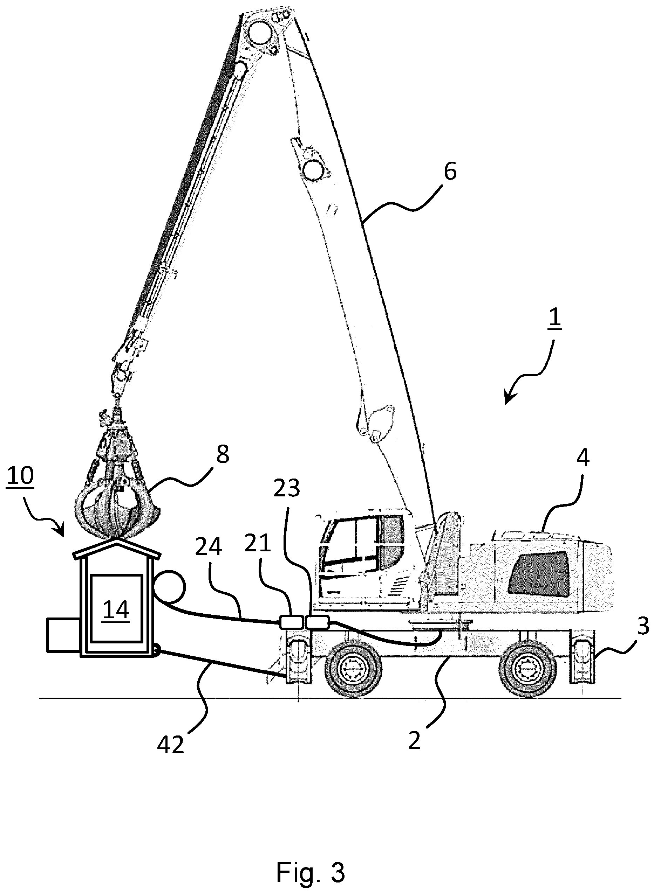

Die Energieversorgungseinheit 10 kann eine Abspanneinrichtung 40 besitzen, welche ein Abspannelement 42 umfasst, bei dem es sich beispielsweise um eine Kette handeln kann. Diese lässt sich an der Arbeitsmaschine 1, beispielsweise an deren Unterwagen 2 oder Abstützvorrichtung 3 (vgl. Fig. 3-4) befestigen.

Die Energieversorgungseinheit 10 besitzt einen ersten elektrischen Anschluss 21, um eine elektrische Verbindung mit einem elektrischen Versorgungssystem der Arbeitsmaschine 1 herzustellen, um einen oder mehrere elektrischen Antriebe der Arbeitsmaschine 1 mit Energie zu versorgen. Die Arbeitsmaschine 1 besitzt hierzu einen passenden dritten elektrischen Anschluss 23. Bei den gezeigten Ausführungsbeispielen umfasst die Energieversorgungseinheit 10 eine flexible Energieversorgungsleitung 24 (in der Fig. 1 nicht gezeigt), beispielsweise ein Stromkabel, an deren Ende sich der erste elektrische Anschluss 21 (z.B. in Form eines Konnektors bzw. Steckers) befindet. Die Energieversorgungleitung 24 kann auf einer Wickelvorrichtung 16 aufgewickelt sein, die seitlich am Gehäuse 12 angeordnet sein kann. Von dieser Wickelvorrichtung 16 lässt sich die Energieversorgungsleitung 24 abwickeln, um die elektrische Verbindung mit der Arbeitsmaschine 1 herzustellen.

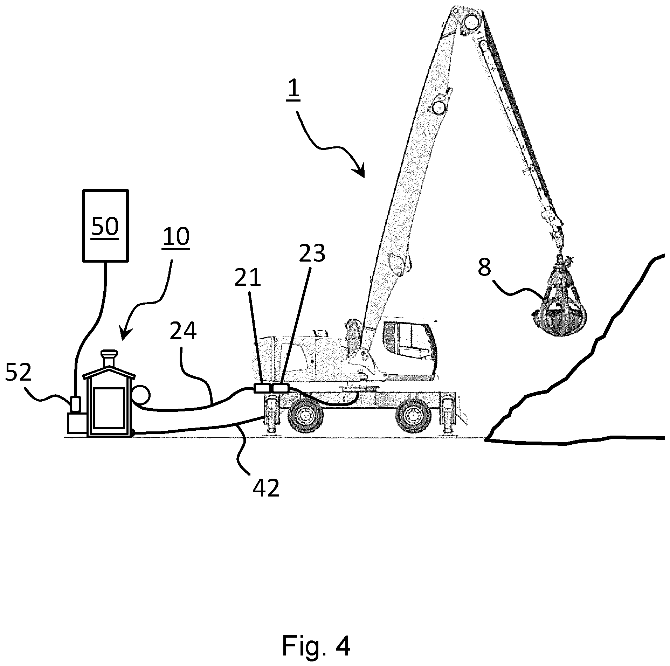

Die Energieversorgungseinheit 10 besitzt ferner einen zweiten elektrischen Anschluss 22, der in Fig. 1 jedoch nicht dargestellt ist. An diesen lässt sich eine externe Energiequelle 50 wie z.B. ein stationäres Stromnetz oder ein stationärer Baustellengenerator anschließen, sodass die Arbeitsmaschine 1 in einem stationären Arbeitsbetrieb über die externe Energiequelle 50 mit elektrischer Energie versorgbar ist. Darüber hinaus kann die Energieversorgungseinheit 10 eine Umschaltvorrichtung 20 umfassen, mittels welcher zwischen dem stationären Betrieb und einem mobilen Betrieb, in dem die interne Energiequelle 14 die Arbeitsmaschine 1 mit Energie versorgt, umgeschaltet werden kann (z.B. per Fernbedienung oder aus der Fahrerkabine der Arbeitsmaschine 1 heraus). Der genannte zweite elektrische Anschluss 22 kann sich an der Umschaltvorrichtung 20 befinden (vgl. Fig. 4).

Im stationären Betrieb ist die mobile Energieversorgungseinheit 10 beispielsweise auf dem Boden abgestellt und über den ersten Anschluss 21 mit der Arbeitsmaschine 1 elektrisch verbunden. Es besteht eine elektrische Verbindung zwischen dem ersten elektrischen Anschluss 21 und dem an die externe Energiequelle 50 angeschlossenen zweiten elektrischen Anschluss 22 unter Umgehung der internen Energiequelle 14. Im mobilen Betrieb ist die externe Energiequelle 50 von der mobilen Energieversorgungseinheit 10 getrennt und die Umschaltvorrichtung 20 verbindet den ersten elektrischen Anschluss 21 mit der internen Energiequelle 14, sodass die Arbeitsmaschine 1 die Energieversorgungseinheit 10 am Aufnahmeelement 30 aufgreifen, anheben und selbstständig verfahren kann. Hierbei erfolgt die Energieversorgung über die Energieversorgungseinheit 10. Die Arbeitsmaschine 1 ist nicht mehr an die limitierte Reichweite der stationären Energieversorgung gebunden.

Die Figur 3 zeigt ein Ausführungsbeispiel der erfindungsgemäßen Arbeitsmaschine 1 mit angehobener Energieversorgungseinheit 10 gemäß der Ausführungsform der Figur 1. Bei diesem Ausführungsbeispiel ist die Arbeitsmaschine 1 eine mobile Umschlagmaschine 1, wobei die erfindungsgemäße Energieversorgungseinheit 10 auch mit einer beliebigen anderen mobilen Arbeitsmaschine 1 mit Greifwerkzeug verwendet werden kann. Die Arbeitsmaschine 1 umfasst einen Unterwagen 2 mit einem Radfahrwerk zum Verfahren der Arbeitsmaschine 1 und einer Abstützvorrichtung 3 mit ausfahrbaren Stützen zum Abstützen der Arbeitsmaschine 1 in einem Arbeitsbetrieb (siehe Figur 4). Auf dem Unterwagen 2 ist ein Oberwagen 4 mit einem Ausleger 6 um eine vertikale Drehachse drehbar gelagert. Der Ausleger 6 ist bei der gezeigten Maschine 1 als Knickausleger mit zwei relativ zueinander verschwenkbaren Auslegersegmenten ausgebildet und kann relativ zum Oberwagen 4 mittels eines nicht dargestellten Hydraulikzylinders auf- und abgewippt werden. Am Ende des Auslegers 6 befindet sich ein Greifwerkzeug 8, welches bei dem gezeigten Ausführungsbeispiel als Mehrschalengreifer ausgebildet ist.

Bei dem Ausführungsbeispiel der Energieversorgungseinheit 10 gemäß Fig. 1 besitzt das Aufnahmeelement 30 im Wesentlichen eine Pilzform und weist einen zylindrischen ersten Abschnitt 31 und einen daran angrenzenden und sich radial nach au-ßen verbreiternden zweiten Abschnitt 32 (= Halteabschnitt) auf. Letzterer verhindert ein Herausrutschen aus dem Greifwerkzeug 8, nachdem dessen Schaufeln sich um das Aufnahmeelement 30 im Bereich des ersten Abschnitts 31 geschlossen haben (vgl. Fig. 3). In der Figur 2 ist ein Aufnahmeelement 30 mit einer alternativen Form gezeigt (dort weist der zweite Abschnitt 32 über dessen Höhe eine konstante Breite auf, während der zweite Abschnitt 32 bei dem Ausführungsbeispiel der Figur 1 unten und oben abgeschrägt ist).

Die Figur 3 zeigt den mobilen Betrieb der Energieversorgungseinheit 10. Diese ist über das Greifwerkzeug 8 angehoben und über die Abspanneinrichtung 40 verspannt. Das Abspannelement 42 ist mit der Abstützvorrichtung 3 mechanisch verbunden und gespannt, sodass die Energieversorgungseinheit 10 gegen den Unterwagen 2 verspannt ist und sich bei einem Verfahren der Arbeitsmaschine 1 nicht unkontrolliert bewegen kann. In Fig. 3 ist der dritte elektrische Anschluss 23 der Arbeitsmaschine 1 schematisch eingezeichnet, welcher eine elektrische Verbindung zum internen Bordnetz und dadurch zu den elektrischen Antrieben bereitstellt.

Die Figur 4 zeigt die Arbeitsmaschine 1 im stationären Betrieb beim Umschlagen von Material mittels des Greifers 8. Die mobile Energieversorgungseinheit 10 ist außerhalb des Arbeitsbereichs der Arbeitsmaschine 1 auf dem Boden abgestellt und über den zweiten elektrischen Anschluss 22 mit einer Energieversorgungsleitung 52 einer externen Energiequelle 50 verbunden. Die Umschaltvorrichtung 20 verbindet die ersten und zweiten elektrischen Anschlüsse 21, 22, während die interne Energiequelle 14 deaktiviert ist, sodass die Arbeitsmaschine 1 von der externen Energiequelle 50 versorgt wird. Auch im stationären Betrieb kann das Abspannelement 42 mit dem Unterwagen 2 verbunden bleiben.

Ein weiterer Vorteil der mobilen Energieversorgungseinheit 10 betrifft Gefahrenlagen. Sollte im stationären Betrieb ein Notfall bzw. eine Gefahrensituation auftreten, so kann die Arbeitsmaschine 1 schnell aus dem Gefahrenbereich hinausbewegt werden. Hierzu wird die Verbindung mit der externen Energiequelle 50 gelöst, die Umschaltvorrichtung 20 auf den mobilen Betrieb umgestellt, die Energieversorgungseinheit 10 über das Aufnahmeelement 30 durch den Greifer 8 gegriffen und gehoben und dabei der Ausleger 6 so bewegt, dass sich die Abspanneinrichtung 40 spannt. Sodann kann die Arbeitsmaschine 1 aus dem Gefahrenbereich gefahren werden.

Da die mobile Energieversorgungseinheit 10 quasi ein Zwischenstück zwischen der Arbeitsmaschine 1 und der stationären Energieversorgung 50 darstellt, muss die Arbeitsmaschine 1 an sich nicht umgebaut werden. Die mobile Energieversorgungseinheit 10 wird im stationären Betrieb zwischen die zweiten und dritten elektrischen Anschlüsse 22, 23 geschaltet. Es muss ggf. lediglich ein Anschlagpunkt für das Abspannelement 42 an der Arbeitsmaschine 1 vorgesehen werden. Dadurch ergibt sich eine große externe Varianz bei einfach zu handhabender interner Varianz.

Die Flexibilität der erfindungsgemäßen mobilen Energieversorgungseinheit 10 kann weiter gesteigert werden, wenn diese einen modularen Aufbau aufweist. In der Figur 2 ist ein alternatives Ausführungsbeispiel gezeigt, bei dem die interne Energiequelle 14 mehrere Energieversorgungsmodule 60 umfasst, die untereinander verschaltet sind. Das Gehäuse 12 kann entsprechende Modulaufnahmen besitzen (nicht dargestellt) mit mechanischen Verbindungsmitteln zur Aufnahme der Module 60. Durch einen solchen modularen Aufbau lassen sich mit derselben Energieversorgungseinheit 10 unterschiedliche Kapazitäten (z.B. mehrere Energiespeichermodule 60 zusammengeschaltet) oder unterschiedliche Anforderungen (z.B. unterschiedliche Stromstärken oder unterschiedliche Arten der Stromerzeugung, beispielsweise mittels Verbrennungsmotor und Generator oder mittels Brennstoffzelle) erreichen.

Bei dem Ausführungsbeispiel der Figur 2 weist zudem das Gehäuse 12 einen anderen Aufbau auf (flaches Oberteil 13). Diese Möglichkeit ist unabhängig von derjenigen eines modularen Aufbaus oder einer anderen Form des Aufnahmeelements 30.

In den Figuren 1-2 ist zu erkennen, dass die Abspanneinrichtung 40 ein am Gehäuse 12 angeordnetes Befestigungsmittel 44 umfasst, an welchem das Abspannelement 42 befestigt ist. Das Befestigungsmittel 44 könnte alternativ am Oberteil 13, an der Umschaltvorrichtung 20 oder an einer beliebigen anderen Stelle der Energieversorgungseinheit 10 angeordnet sein.

### Bezugszeichenliste:

- 1: Arbeitsmaschine
- 2: Unterwagen
- 3: Abstützvorrichtung
- 4: Oberwagen
- 6: Ausleger
- 8: Greifwerkzeug
- 10: Mobile Energieversorgungseinheit
- 12: Gehäuse
- 13: Oberteil
- 14: Energiequelle
- 16: Wickelvorrichtung
- 20: Umschaltvorrichtung
- 21: Erster elektrischer Anschluss
- 22: Zweiter elektrischer Anschluss
- 23: Dritter elektrischer Anschluss
- 24: Flexible Energieversorgungsleitung
- 30: Aufnahmeelement
- 31: Erster Abschnitt
- 32: Zweiter Abschnitt
- 40: Abspanneinrichtung
- 42: Abspannelement
- 44: Befestigungsmittel
- 50: Externe Energiequelle
- 52: Externer Energieversorgungsanschluss
- 60: Energieversorgungsmodul

## Patentansprüche

1. Mobile Energieversorgungseinheit (10) für eine elektrisch betreibbare, mobile Arbeitsmaschine (1) umfassend eine von einem Gehäuse (12) umgebene Energiequelle (14) und einen ersten elektrischen Anschluss (21), über welchen die Arbeitsmaschine (1) mit der Energiequelle (14) elektrisch verbindbar und von dieser mit elektrischer Energie versorgbar ist,
**dadurch gekennzeichnet,**
**dass** das Gehäuse (12) ein Aufnahmeelement (30) aufweist, welches so ausgebildet und angeordnet ist, dass die Energieversorgungseinheit (10) mittels eines Greifwerkzeugs (8) oder einer Schnellkupplungseinrichtung der Arbeitsmaschine (1) greifbar und bewegbar ist.

2. Mobile Energieversorgungseinheit (10) nach Anspruch 1, wobei das Aufnahmeelement (30) an einer Oberseite des Gehäuses (12) angeordnet ist und vorzugsweise den höchsten Punkt der Energieversorgungseinheit (10) bildet.

3. Mobile Energieversorgungseinheit (10) nach Anspruch 1 oder 2, wobei das Aufnahmeelement (30) einen insbesondere zylindrisch geformten ersten Abschnitt (31) und an einem dem Gehäuse (12) abgewandten Ende einen gegenüber dem ersten Abschnitt (31) verbreiterten zweiten Abschnitt (32) umfasst.

4. Mobile Energieversorgungseinheit (10) nach einem der vorhergehenden Ansprüche, ferner umfassend einen zweiten elektrischen Anschluss (22), welcher mit einer externen Energiequelle (50) elektrisch verbindbar ist, sowie eine Umschaltvorrichtung (20), welche mit den ersten und zweiten elektrischen Anschlüssen (21, 22) und mit der Energiequelle (14) der Energieversorgungseinheit (10) elektrisch verbunden und dazu ausgebildet ist, in einem stationären Betrieb die ersten und zweiten elektrischen Anschlüsse (21, 22) elektrisch miteinander zu verbinden, sodass die Arbeitsmaschine (1) über die externe Energiequelle (50) versorgbar ist, und in einem mobilen Betrieb die Energiequelle (14) der Energieversorgungseinheit (10) mit dem ersten elektrischen Anschluss (21) elektrisch zu verbinden, sodass die Arbeitsmaschine (1) über die Energiequelle (14) der Energieversorgungseinheit (10) versorgbar ist.

5. Mobile Energieversorgungseinheit (10) nach dem vorhergehenden Anspruch, wobei die Umschaltvorrichtung (20) manuell, drahtlos oder über eine Signalleitung, welche vorzugsweise über den ersten elektrischen Anschluss (21) mit einer Steuerung der Arbeitsmaschine (1) verbindbar ist, zwischen dem mobilen und dem stationären Betrieb umschaltbar ist.

6. Mobile Energieversorgungseinheit (10) nach einem der vorhergehenden Ansprüche, ferner umfassend eine Abspanneinrichtung (40), welche mit der Arbeitsmaschine (1), insbesondere mit einer Tragstruktur der Arbeitsmaschine (1), mechanisch verbindbar ist, um eine Relativbewegung zwischen Energieversorgungseinheit (10) und Arbeitsmaschine (1) zu begrenzen, wobei die Abspanneinrichtung (40) vorzugsweise ein mit dem Gehäuse (12) verbundenes und ein mechanisches Anschlusselement aufweisendes Abspannelement (42) umfasst, welches insbesondere eine Kette, ein Seil oder ein Band ist oder umfasst.

7. Mobile Energieversorgungseinheit (10) nach einem der vorhergehenden Ansprüche, ferner umfassend eine flexible Energieversorgungsleitung (24), welche elektrisch mit der Energiequelle (14) verbunden ist und den ersten elektrischen Anschluss (21) aufweist, wobei die Energieversorgungseinheit (10) vorzugsweise eine Wickelvorrichtung (16) umfasst, auf welcher die Energieversorgungsleitung (24) auf- und abwickelbar gelagert ist.

8. Mobile Energieversorgungseinheit (10) nach einem der vorhergehenden Ansprüche, wobei die Energiequelle (14) einen Verbrennungsmotor mit nachgeschaltetem Generator, einen Energiespeicher und/oder eine Brennstoffzelle umfasst.

9. Mobile Energieversorgungseinheit (10) nach dem vorhergehenden Anspruch, wobei die Energieversorgungseinheit (10) einen modularen Aufbau besitzt und die Energiequelle (14) ein oder mehrere reversibel mit dem Gehäuse (12) und/oder miteinander verbindbare Energieversorgungsmodule (60) umfasst, wobei das Gehäuse (12) vorzugsweise Aufnahmen mit mechanischen Verbindungselementen zur reversiblen Aufnahme von Energieversorgungsmodulen (60) besitzt.

10. Mobile Energieversorgungseinheit (10) nach einem der vorhergehenden Ansprüche, wobei das Aufnahmeelement (30) lösbar mit dem Gehäuse (12) verbunden oder aus mehreren miteinander lösbar verbindbaren Teilen aufgebaut ist.

11. Set umfassend eine Energieversorgungseinheit (10) nach Anspruch 10 und mindestens ein weiteres, unterschiedlich ausgebildetes Aufnahmeelement (30) oder abnehmbares Teil des Aufnahmeelements (30) und/oder umfassend eine Energieversorgungseinheit (10) nach Anspruch 9 und mindestens ein weiteres Energieversorgungsmodul (60).

12. Mobile Arbeitsmaschine (1), insbesondere mobile Umschlagmaschine, mit einer mobilen Energieversorgungseinheit (10) nach einem der Ansprüche 1 bis 10 oder einem Set nach Anspruch 11, wobei die Arbeitsmaschine (1) elektrisch betreibbar ist, vorzugsweise rein elektrisch betreibbar, und ein Greifwerkzeug (8) und/oder eine Schnellkupplungseinrichtung aufweist, mittels welchem / welcher die Energieversorgungseinheit (10) über das Aufnahmeelement (30) greifbar und bewegbar ist.

13. Mobile Arbeitsmaschine (1) nach dem vorhergehenden Anspruch, umfassend mindestens einen elektrischen Antrieb und einen dritten elektrischen Anschluss (23), welcher mit dem ersten elektrischen Anschluss (21) der Energieversorgungseinheit (10) verbindbar ist, um den elektrischen Antrieb zu versorgen.

14. Verfahren zum Bewegen einer mobilen Energieversorgungseinheit (10) nach einem der Ansprüche 1 bis 10 mittels einer mobilen Arbeitsmaschine (1) nach einem der Ansprüche 12 bis 13, wobei die Arbeitsmaschine (1) über ein Greifwerkzeug (8) und/oder eine Schnellkupplungseinrichtung die Energieversorgungseinheit (10) am Aufnahmeelement (30) greift und anhebt, wobei die Energieversorgungseinheit (10) während dieser Bewegung und insbesondere auch im stationären Zustand während des Arbeitsbetriebs der Arbeitsmaschine (1) ständig mit der Arbeitsmaschine (81) elektrisch und vorzugsweise über eine Abspanneinrichtung (40) nach Anspruch 6 mechanisch verbunden bleibt.

15. Verfahren nach dem vorhergehenden Anspruch, wobei die Energieversorgungseinheit (10) zumindest gemäß den Merkmalen des Anspruchs 4 oder 5 weitergebildet ist, wobei die Arbeitsmaschine (1) vor dem Bewegen der Energieversorgungseinheit (10) im stationären Betrieb über eine externe Energiequelle (50) mit Energie versorgt wird, wobei die Umschaltvorrichtung (20) vom stationären Betrieb in den mobilen Betrieb umgeschaltet wird, sodass die Arbeitsmaschine (1) über die Energiequelle (14) der Energieversorgungseinheit (10) und nicht mehr über die externe Energiequelle (50) mit Energie versorgt wird, wobei vorzugsweise nach dem Bewegen der Energieversorgungseinheit (10) die Umschaltvorrichtung (20) wieder in den stationären Betrieb umgeschaltet wird.
